# EUROPEAN PATENT SPECIFICATION

(11) **EP 3 231 747 B1**
(45) Date of publication and mention of the grant of the patent: **04.12.2019**
(21) Application number: 16164635.1
(22) Date of filing: 11.04.2016
(51) Int. Cl.: B65G 54/02, G03F 7/20, H02K 41/03

(54) **TRANSPORT APPARATUS WITH A SIMPLIFIED LINEAR MOTOR**
TRANSPORTVORRICHTUNG MIT VEREINFACHTEM LINEARMOTOR
APPAREIL DE TRANSPORT AVEC UN MOTEUR LINÉAIRE SIMPLIFIÉ

(43) Date of publication of application: 18.10.2017
(73) Proprietor: ROBERT BOSCH GMBH, 70442 Stuttgart (DE)
(72) Inventor: Pancras, Wilco, 5612KG Eindhoven (NL)
(74) Representative: Thürer, Andreas

(56) References cited:
- EP-A2- 1 434 335
- US-A- 5 334 892
- US-A- 5 925 956
- US-A- 6 003 230
- US-A1- 2012 328 836
- US-A1- 2013 258 307

## Description

The present invention relates to a transport apparatus and a transport method for transporting carriers in a machine. In particular, the present invention relates to a transport apparatus and a transport method which are used in a machine for performing a process, for example, in producing an article, in treating an article, in carrying an article, etc.

Machines for producing an article are known in which materials to be used in the production process are to be transported from a load position to at least one working station, for example, a process chamber, and thereafter to an unload position. Herein, transport carriers are used which are guided and moved along tracks between the loading position, the working station, and the unloading position. In some cases the carriers have to be transported automatically from the unloading position back to the loading position.

US 2012/0328836 A1 discloses the preamble of claim 1 and the preamble of claims 14

US 6 003 230 A shows a magnetic positioner having a single moving part. The positioner is capable of providing long travel in two dimensions and short travel in the remaining four dimensions. Herein, the centers of the first and second magnetic elements are positioned on a straight line.

US 5,334,892 A shows a positioning device for planar positioning in a small travel range. A first linear motor moves a shuttle linearly in a first direction while a second and third linear motor move the shuttle linearly in a second direction, normal to the first direction. The centers of the second and third linear motors are on a straight line which is parallel to the first moving direction.

For optimising the process, on the one hand, the way to be travelled by the carriers shall be as short as possible. The reason for this is that the length of the way determines also the costs necessary for operating the machine and thus for the transport in the machine. The shorter the way is, the lower are the overall costs of the machine and the costs for installing the machine. Further, the length of the way to be travelled by the carriers and/or the number of carriers also influences the working cycle of the machine. The longer the working cycle is, the higher are the costs for performing the process.

On the other hand, for optimizing the process, it is required that the transport of the carriers and therewith the articles is performed with the minimum use of resources. A use of recourses includes both the components necessary for moving the carriers in the machine and the consumption of energy necessary for moving the carriers.

Therefore, it is an object of the present invention to provide a transport apparatus and a transport method for transporting carriers in a machine which can fulfil the above mentioned needs. In particular, a transport apparatus and a transport method for transporting carriers in a machine shall be provided which can transport the carriers and thus the load to be carried by the carriers with low cost, with high precision, fast, and reliable.

This object is solved by a transport apparatus for transporting carriers in a machine according to claim 1 and a transport method according to claim 14. The transport apparatus comprises at least one carrier for carrying a load, and a planar driving system for driving the at least one carrier with magnetic force between at least two positions in a plane spanned by a first and second moving direction, wherein at least one carrier of the at least one carriers comprises less magnetic force exerting elements which are orientated in the second moving direction for driving said carrier in the first moving direction than said carrier comprises magnetic force exerting elements which are orientated in the first moving direction for driving the carrier in the second moving direction, so that the planar driving system and said carrier interact to drive said carrier in the first moving direction in a smaller range than in the second moving direction, as mentioned in claim 1.

The transport apparatus is optimized in the number of parts required for moving the carriers in the machine. Therefore, the transport apparatus can be produced with low cost. The transport apparatus is in particular optimized for linear motion applications, in which a smaller motion in a direction transverse to the direction of the linear motion shall be possible, as well. Thus, the transport apparatus can provide a very cheap, easy and sensing solution.

As a further advantage as regards the costs, multiple independently movable carriers can be used in the transport apparatus. This contributes to further lowering the costs. In addition, a very flexible design of the transport apparatus is possible.

Moreover, the transport apparatus can move the load to be carried by the carriers with high precision, fast, and reliable.

Further advantageous developments are set out in the dependent claims.

It is advantageous in case the planar driving system is constructed to drive the at least one carrier in the first moving direction in a smaller range than in the second moving direction.

In one embodiment, the planar driving system comprises at least two first coil sections for moving the at least one carrier in the second moving direction, and at least one second coil section for moving the at least one carrier in the first moving direction which is positioned transverse to the second moving direction, wherein each of the at least two first coil sections has a shorter length than the at least one second coil section. Herein, it is preferred that the at least one carrier is positioned to interact with at least two coil sections of the first and second coil sections so that the at least one carrier is transported in the machine in a transport direction.

It is possible that the first and second coil sections are linear coil sections or curved coil sections. Additionally or alternatively, two second coil sections can be coupled with coupling means to lengthen the transport track of the machine arbitrarily.

In an advantageous implementation, the magnetic force exerting elements of said carrier are positioned to each other to form an open frame. Herewith, a minimum of parts by maximum movability in the moving directions can be achieved.

In another advantageous implementation, the magnetic force exerting elements of said carrier are configured to produce magnetic force by eddy currents generated in said carrier.

In one embodiment, the magnetic force exerting elements of said carrier can be magnet arrays comprising at least two magnets, and said carrier can comprises at least three magnet arrays which are positioned to each other to form an open frame. Herein, each one of the three magnet arrays can comprise at least two magnets positioned side by side to form a rectangular.

It is also possible that one of the rectangular magnet arrays is positioned adjacent to a long side of one of the rectangular magnet arrays and adjacent to a short side of another one of the rectangular magnet arrays.

It is further possible that to the short sides of one of the rectangular magnet arrays is positioned no other one of the rectangular magnet arrays.

For finding out the location of the carriers in the planar driving system, a plurality of detecting units to detect the position of the at least one carrier at the planar driving system can be provided, wherein the at least one carrier can be driven by a control device on the basis of the position detected by the detecting units.

The above-described transport apparatus can be part of a machine for performing a process. Herein, the transport apparatus can be configured to be used in the process performed in the machine.

The machine may further comprise a control device for controlling the process performed in the machine and for controlling driving of the carriers of the transport apparatus (3; 4) in interaction with the process.

The above-mentioned object is further solved by a transport method for transporting carriers in a machine according to claim 14. The transport method comprises the steps of using at least one carrier for carrying a load, and driving, by a planar driving system, the at least one carrier with magnetic force between at least two positions in a plane spanned by a first and second moving direction, wherein at least one carrier of the at least one carriers comprises less magnetic force exerting elements which are orientated in the second moving direction for driving said carrier in the first moving direction than said carrier comprises magnetic force exerting elements which are orientated in the first moving direction for driving the carrier in the second moving direction, and wherein the planar driving system and said carrier interact to drive said carrier in the first moving direction in a smaller range than in the second moving direction, as mentioned in claim 14.

Further possible implementations of the invention comprise also combinations of features or styles described above or in the following with reference to the embodiments, even if the combinations are not explicitly mentioned. Therefore, the person skilled in the art will also add single aspects as improvements or additions to the respective basic form of the invention.

In the following, the invention is described in more detail by means of embodiments and with reference to the appended drawing Figures, wherein:
Fig. 1 shows a simplified top view onto a transport apparatus usable in a machine according to a first embodiment;
Fig. 2 shows a flow chart for illustrating a transport method performed by the transport apparatus in the machine according to the first embodiment;
Fig. 3 shows a simplified top view onto a carrier according to a second embodiment; and
Fig. 4 shows a simplified top view onto a transport apparatus usable in a machine according to a third embodiment.

In the drawing Figures, the same or functionally same elements are provided with the same reference signs unless given otherwise.

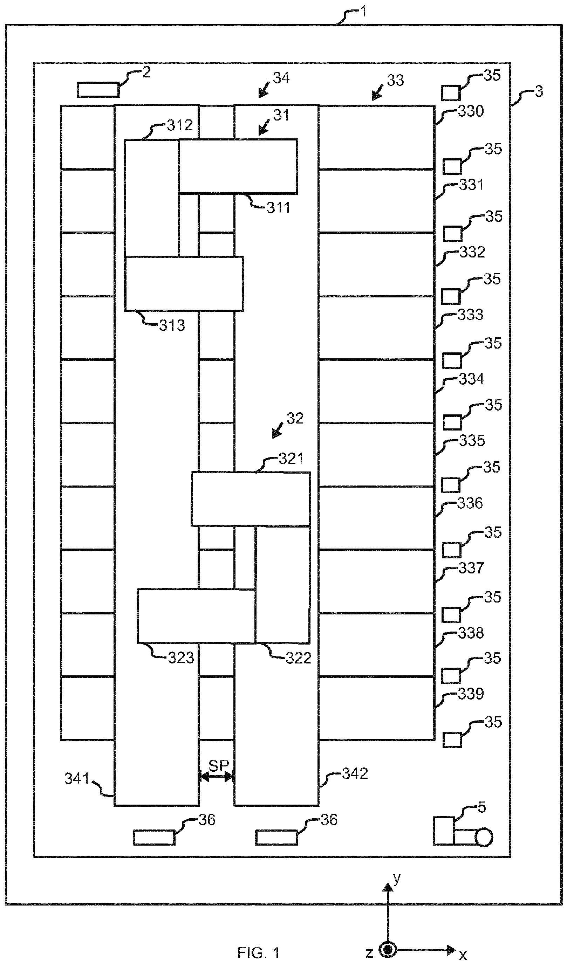

Fig. 1 shows a machine 1 having a control device 2. The machine 1 further comprises a transport apparatus 3 which is controlled by the control device 2. The transport apparatus 3 is based on a magnetically levitated transport with which a particle free transport is possible.

The machine 1 can be used for performing a process. The process can comprise producing and/or treating or carrying an article 5 etc. In particular, the process can be implemented in the production of semiconductor elements used in the electric industry or in the assembly of production of appliances or in the production of vehicles, etc.

The transport apparatus 3 comprises a first carrier 31, a second carrier 32, first direction coil sections 33, second direction coil sections 34, a plurality of first direction carrier detecting units 35, and a plurality of second direction carrier detecting units 36. The first direction coil sections 33 and the second direction coil sections 34 are positioned transverse to each other. In Fig. 1, the first and second direction coil sections 33, 34 are positioned orthogonally to each other.

The first direction coil sections 33 and the second direction coil sections 34 build up a planar driving system for driving the carriers 31, 32 with magnetic force in a plane spanned by a first and second moving direction x, y.

Thus, the carriers 31, 32 can be transported in a transport direction, which is a result of the first and second moving directions x, y interacting or cooperating with each other. The transport direction also includes a rotation of at least one of the carriers 31, 32 around a z-axis which is positioned orthogonally to the first and second moving directions x, y, as shown in Fig. 1. The carriers 31, 32 can carry as a load the article 5 that is used or produced or treated in the process performed in the machine 1.

The first and second carriers 31, 32 can hover or slide over the first and second direction coil sections 33, 34 by magnetic levitation. Herein, the carriers 31, 32 build a rotor of an electric motor and can be moved relative to the first and second direction coil sections 33, 34 which build a stator of the electric motor.

The magnetic levitation is achieved by magnetic force exerting elements 311, 312, 313 for the first carrier 31. And, the magnetic levitation is achieved by magnetic force exerting elements 321, 322, 323 for the second carrier 32. The magnetic force exerting elements 311, 312, 313 and/or the magnetic force exerting elements 321, 322, 323 can be formed as at least one magnet positioned in the carriers 31, 32. However, instead of magnets in one the carriers 31, 32, it is also possible to achieve the magnetic levitation to produce other physical effects in one of the carriers 31, 32, for example, eddy currents in the carriers 31 and/or the carrier 32, etc.

For the magnetic levitation, the first and second direction coil sections 33, 34 can also comprise outlets for producing hover cushions between the carriers 31, 32 and the first and second direction coil sections 33, 34. In this case the magnetic levitation is implemented in non-contact between the carriers 31, 32 and the first and second direction coil sections 33, 34. However, it is also possible that the carriers 31, 32 slide on the first and/or second direction coil sections 33, 34 so that the magnetic levitation is implemented in contact between the carriers 31, 32 and the first and second direction coil sections 33, 34.

The first carrier 31 comprises three magnetic force exerting elements 311, 312, 313 which are positioned adjacent to each other. All of the magnetic force exerting elements 311, 312, 313 in Fig. 1 have a rectangular form. All of the three magnetic force exerting elements 311, 312, 313 in Fig. 1 preferably have the same length and the same width to reduce the plurality of parts for forming the carrier 31 to a minimum. However, the magnetic force exerting elements 311, 312, 313 are not limited to the forms mentioned above and shown in Fig. 1. For example, the a magnet array can comprise a jagged edge or can have another form as long as the function described above and in the following is achieved.

The first magnetic force exerting element 311 is positioned with one of its short sides adjacent to one of the long sides of the magnetic force exerting element 312. Further, the second magnetic force exerting element 312 is positioned with one of its short sides adjacent to one of the long sides of the magnetic force exerting element 313. Therewith, the magnetic force exerting elements 311, 312, 313 form the circumference of a tile in which one edge is missing. In other words, the magnetic force exerting elements 311, 312, 313 almost form a rectangular frame, since one part of the frame is missing. With other words, the magnetic force exerting elements 311, 312, 313 form an open frame.

The second carrier 32 comprises three magnetic force exerting elements 321, 322, 323 which are positioned adjacent to each other. All of the magnetic force exerting elements 321, 322, 323 have a rectangular form. All of the three magnetic force exerting elements 321, 322, 323 preferably have the same length and the same width to reduce the plurality of parts for forming the carrier 32 to a minimum. However, the magnetic force exerting elements 321, 322, 323 are not limited thereto.

The first magnetic force exerting element 321 is positioned with one of its long sides adjacent to one of the short sides of the magnetic force exerting element 322. Further, the second magnetic force exerting element 322 is positioned with one of its long sides adjacent to one of the short sides of the magnetic force exerting element 323. Therewith, also the magnetic force exerting elements 321, 322, 323 form the circumference of a tile in which one edge is missing. In other words, the magnetic force exerting elements 321, 322, 323 almost form a rectangular frame, since one part of the frame is missing. With other words, the magnetic force exerting elements 321, 322, 323 form an open frame.

Generally, it is desirable that the centers of the magnetic force exerting elements 311, 312, 313, 321, 322, 323 of each carrier 31, 32 are displaced from each other so that the centers of the magnetic force exerting elements 311, 312, 313, 321, 322, 323 of each carrier 31, 32 are not located on a straight line, as shown in Fig. 1. The reason for this is that in case the centers of the magnetic force exerting elements 311, 312, 313, 321, 322, 323 of each carrier 31, 32 are located on a straight line, one would loose control in one degree of freedom of movement.

The first direction coil sections 33 comprise in the example of Fig. 1 a plurality of first linear coil sections, namely the first linear coil sections 330 to 339 along which the carriers 31, 32 can travel in the second moving direction. In Fig. 1, the second moving direction corresponds to the y-direction illustrated by an arrow in Fig. 1. Thus, the second moving direction y is the vertical direction in Fig. 1.

Each one of the first linear coil sections 330 to 339 has in the first moving direction x a length which is larger than a width of each of the first linear coil sections 330 to 339 in the second moving direction y. Thus, the first linear coil sections 330 to 339 are orientated in the first moving direction x. All of the first linear coil sections 330 to 339 preferably have the same length and the same width to reduce the plurality of parts for forming the planar drive system to a minimum. However, the first linear coil sections 330 to 339 are not limited thereto.

The second direction coil sections 34 comprise in the example of Fig. 1 two second linear coil sections, namely the second linear coil sections 341, 342 along which the carriers 31, 32 can travel in the first moving direction. In Fig. 1, the first moving direction corresponds to the x-direction illustrated by an arrow in Fig. 1. Thus, the first moving direction is the horizontal direction in Fig. 1.

Each one of the second linear coil sections 341, 342 has in the second moving direction y a length which is larger than a width of each of the second linear coil sections 341, 342 in the first moving direction x. Thus, the second linear coil sections 341, 342 are orientated in the second moving direction y. All of the second linear coil sections 341, 342 preferably have the same length and the same width to reduce the plurality of parts for forming the planar drive system to a minimum. However, the second linear coil sections 341, 342 are not limited thereto.

The first linear coil sections 330 to 339 have a smaller length than the second linear coil sections 341, 342. Thus, the carriers 31, 32 can travel in the first moving direction x in a smaller range than in the second moving direction y. This is advantageous in processes of a machine 1, where the moving range in the first moving direction x is required to be much smaller than in the second moving direction y.

The (long) coil sections 341, 342 in Fig. 1, which are oriented in the direction of transport, are responsible for generating forces in the shorter moving direction, the x-direction in Fig. 1. Since there is only one magnetic force exerting element 312 of the carrier 31 over this (long) coil sections 341, actually only one coil section 341 for moving in the direction parallel to the direction of transport is needed. In Fig. 1, since there are two long coil sections 341, 342, each one thereof can be used for one carrier 31, 32.

In principle, at least two short coil sections 330 to 339 and one long coil section 341 or 342 are to be provided per carrier 31, 32. Each coil/magnet-pair can generate two forces, so that there are six forces available, namely one for each degree of freedom of movement.

In Fig. 1, the first linear coil sections 330 to 339 are positioned adjacent to each other such that no or almost no space is present between the single first linear coil sections 330 to 339. In other words, the first linear coil section 330 abuts the first linear coil section 331, the first linear coil section 331 also abuts the first linear coil section 332, etc. Further, the magnetic force exerting elements 312, 322 of the carriers 31, 32 are sized such that the magnetic force exerting elements 312, 322 have a length which is twice the width of the first linear coil sections 330 to 339.

In contrast thereto, the second linear coil sections 341, 342 in Fig. 1 are positioned adjacent to each other such that there is a space SP present between them. Therefore, the second linear coil sections 341, 342 are positioned spaced to each other.

The carrier 31 is sized such that the carrier 31 can be driven by one of the first linear coil sections 330 to 339, for example the first linear coil section 330, in the second moving direction y that far that the next adjacent first linear coil section, the first linear coil section 331 in this example, can take over for driving the carrier 31.

The carrier 31 is further sized such that the carrier 31 can be driven by one of the second linear coil sections 341, 342, for example the second linear coil section 341, in the first moving direction x that far that the next adjacent second linear coil section, the second linear coil section 342 in this example, can take over for driving the carrier 31. Nevertheless, the magnetic force exerting element 312 is influenced by the second linear coil section 341, and the magnet array 322 is influenced by the second linear coil section 342. Consequently, the both second linear coil sections 341, 342 are usually intended to control different carriers 31, 32.

In Fig. 1, the first and third magnetic force exerting elements 311, 313 of the carrier 31 have as an example a length with is equal to the width of one of the first linear coil sections 330 to 339 plus the space SP. And, the second magnetic force exerting element 312 of the carrier 31 has as an example a length with is equal to twice the width of one of the first linear coil sections 330 to 339.

In other words, in the configuration shown in Fig. 1, the second linear coil section 341 works together with the magnetic force exerting element 312 to excert a force in the x-direction. The magnetic force exerting element 311 works together with the first linear coil sections 330, 331 to generate a force in the y-direction. And, the magnetic force exerting element 313 works together with the first linear coil sections 332, 333 to excert a force in the y-direction. Therefore, the width of the magnetic force exerting elements 311, 313 is usually equal to the width of the first linear coil sections 330 to 339. There should be a distance between the first linear coil sections 331, 333 in the y-direction which distance is at least equal to the width of a coil section of the first linear coil sections 330 to 339. Otherwise, both magnetic force exerting element 311, 313 would interact with the same first linear coil section of the first linear coil sections 330 to 339.

The second linear coil sections 341, 342 are made a bit wider in Fig. 1 on purpose. Due to this, the second linear coil section 341 interacts only with the magnetic force exerting element 312 and the second linear coil section 342 only interacts with the magnet array 322. Preferably, only one of the second linear coil sections 341, 342 is used for travelling in the x-direction. By configuring the second linear coil sections 341, 342 a bit wider, there is still some travelling range before the magnetic force exerting elements 312, 322 get out of reach for the second linear coil sections 341, 342.

Further, the magnetic force exerting elements 311, 312, 313 of the carrier 31 are positioned with there long and short sides adjacent to each other as decribed above.

The carrier 32 is sized in the same way as the carrier 31 to achieve the structure shown in Fig. 1. All of the magnetic force exerting elements 311, 312, 313, 321, 322, 323 can be implemented as a magnet.

It is in addition advantageous to arrange the carriers 31, 32 such that the second magnetic force exerting element 312 of the carrier 31 is positioned over the second linear coil section 341 whereas the second magnetic force exerting element 322 of the carrier 32 is positioned over the second linear coil section 342, as shown in Fig. 1. Therewith, the carriers 31, 32 can entirely be driven independently in the second moving direction. However, in case the carriers 31, 32 shall be driven simultaneously in the second moving direction, the second magnetic force exerting elements 312, 322 of the carriers 31, 32 can both be positioned over the same one of the second linear coil sections 341, 342. Nevertheless, even if driving the carriers 31, 32 simultaneously is possible, it is preferred to drive the carriers 31, 32 by different second linear coil sections 341, 342, as mentioned above.

The control device 2 can control the process performed in the machine 1. Herein, the control device 2 can control driving of the carriers 31, 32 of the transport apparatus 3 in interaction with the process. This means, the control device 2 can control the carriers 31, 32 of the transport apparatus 3 at any time, in particular before, during, and after the process is performed, so that the carriers 31, 32 are located at the positions required for performing the process.

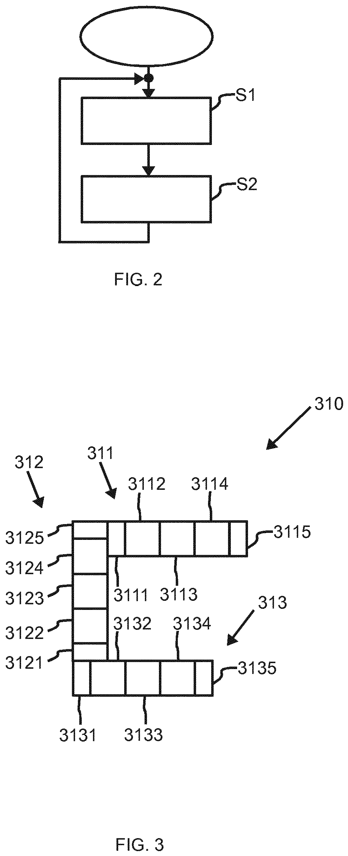

Fig. 2 shows a corresponding transport method which is performed with the transport apparatus 3 by a control of the control device 2 for transporting the carriers 31, 32 in the machine 1.

Herein, after a start of the transport method, one or both of the carriers 31, 32 can be used for carrying a load in a step S1. This includes that a load, for example the article 5, is loaded to at least one of the carriers 31, 32. However, if necessary, the load can also be unloaded from one of the carriers 31, 32. Thereafter, the flow proceeds to a step S2.

In the step S2, the planar driving system drives the at least one carrier 31, 32 with magnetic force between at least two positions in a plane spanned by the first and second moving directions x, y as shown in Fig. 1. Herein, the planar driving system and one or both of the carriers 31, 32 interact to drive one or both of the carriers 31, 32 in the first moving direction in a smaller range than in the second moving direction, as decribed above. Thereafter, the flow goes back to the step S1.

The transport method is finished when the process in the machine 1 is finished or a system for providing the transport apparatus 3 with electrical energy is shut off.

In the transport apparatus 3 and the transport method, the carriers 31, 32 can be driven with a velocity in the range of 1 m/sec. the acceleration of the carriers 31, 32 in at least one of the first and second moving directions can be in the range of 10 m/sec². The motion resolution in each direction of the x-, y-, z-directions can be as less as 1 µm. Therewith, a high precision in moving the carriers 31, 32 in the machine 1 can be achieved.

Due to the described configuration of the transport apparatus 3 of the machine 1, the carriers 31, 32 have a large movement range in one degree of freedom, namely in the y-direction in the example of Fig. 1. However, the carriers 31, 32 have a small movement range in five degrees of freedom, namely in the x-direction in the example of Fig. 1, in the z-direction in Fig. 1, and a rotation around the x, y, z-direction. Thus, the planar driving system realized by the first linear coil sections 330 to 339 and the second linear coil sections 341 to 342 of Fig. 1 realizes an essentially linear movement in the y-direction.

Consequently, due to the construction of the carriers 31, 32, the transport apparatus 3 can have second linear coil sections 341, 342 which are broader than the first linear coil sections 330 to 339. Thus, there can be the space SP between the second linear coil sections 341, 342. This reduces to a minimum the number of second linear coil sections 341, 342 required for driving the carriers 31, 32 in the first moving direction x.

Further, the transport apparatus 3 of the machine 1 requires less position detecting units 36 for detecting the position of the carriers 31, 32 in the first moving direction x than position detecting units 35 are required in the second moving direction y. This contributes to using a minimum number of parts for the transport apparatus 3 of the machine 1, as well.

As a result of the above-described construction of the transport apparatus 3, the control for driving the carriers 31, 32 which is to be performed is made with low cost as simple, precise, fast and reliable as possible.

Fig. 3 shows the construction of a first carrier 310 according to a second embodiment. The first carrier 310 can be used instead of both or only one of the carriers 31, 32 in the transport apparatus 3 of the first embodiment.

The first carrier 310 has three magnetic force excerting elements 311, 312, 313 which are each implemented by magnet arrays. Herein, each magnet array of the carrier 310 comprises five magnets.

Therefore, the magnet array implementing the magnetic force excerting element 311 comprises the magnets 3111, 3112, 3113, 3114, 3115. The magnets 3111, 3112, 3113, 3114, 3115 are positioned side by side to form a rectangular. The three magnets 3112, 3113, 3114 in the middle have a square cross-section. The two magnets 3111, 3115 on the outside are half as wide as the magnets 3112, 3113, 3114. The magnets 3111, 3112, 3113, 3114, 3115 form a Halbach-array.

The magnet array implementing the magnetic force excerting element 312 comprises the magnets 3121, 3122, 3123, 3124, 3125. The magnets 3121, 3122, 3123, 3124, 3125 are positioned side by side to form a rectangular. The three magnets 3122, 3123, 3124 in the middle have a square cross-section. The two magnets 3121, 3125 on the outside are half as wide as the magnets 3122, 3123, 3124. The magnets 3121, 3122, 3123, 3124, 3125 form a Halbach-array.

The magnet array implementing the magnetic force excerting element 313 comprises the magnets 3131, 3132, 3133, 3134, 3135. The magnets 3131, 3132, 3133, 3134, 3135 are positioned side by side to form a rectangular. The three magnets 3132, 3133, 3134 in the middle have a square cross-section. The two magnets 3131, 3135 on the outside are half as wide as the magnets 3132, 3133, 3134. The magnets 3131, 3132, 3133, 3134, 3135 form a Halbach-array. Therewith, the size of the carrier 310 can be selected with low cost and very flexibly as desired.

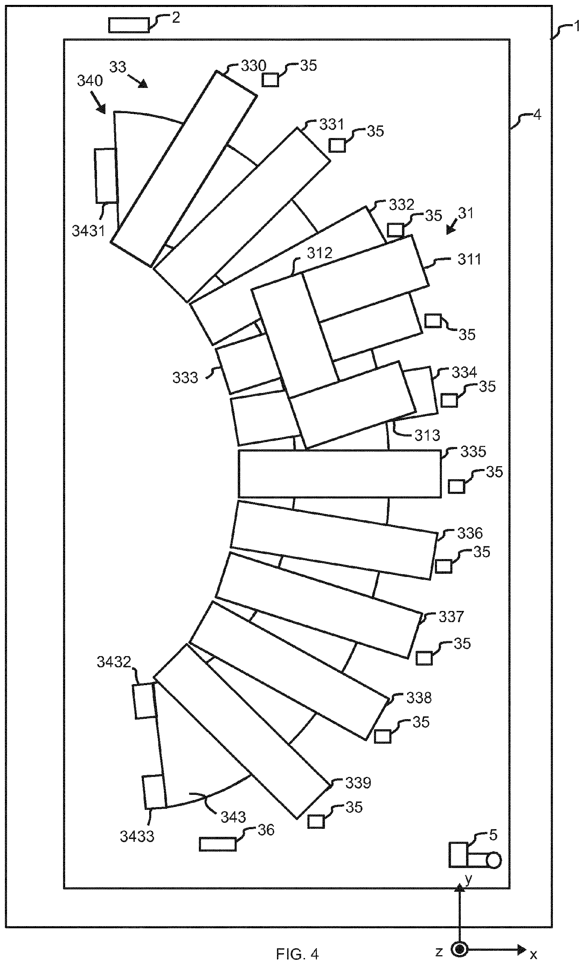

Fig. 4 shows a transport apparatus 4 according to a third embodiment. The transport apparatus 4 according to the present embodiment can be used instead or in combination with the transport apparatus 3 according to the above described embodiments.

The transport apparatus 4 according to the present embodiment is configured in many parts like the transport apparatus 3 according to the above described embodiments. The difference between the transport apparatus 4 according to the present embodiment and the transport apparatus 3 according to the above described embodiments lies in that a second direction coil section 340 is provided which comprises a linear second coil section 343configured to form a curve instead of the second linear coil sections 341, 342 of Fig. 1. Herein, the coil sections 330 to 339 of the direction x are positioned perpendicular to the coil section 343 of the direction y. Further, the orientations of the magnetic force exerting elements 311, 312, 313 of the carrier 31 are aligned with the coil orientations of the coil sections 330 to 339, 343. Thus, in the transport apparatus 4 of Fig. 4, the coil sections 330 to 339 are positioned radially and the carrier 31 is rotated correspondingly.

Therewith, not only linear tracks but also curved tracks can be provided for the transport apparatus 4 of a machine 1.

Optionally, the linear second coil section 343 comprises coupling means 3431, 3432, 3433 for coupling the linear second coil section 343 to another linear second coil section 343 and/or to one of the second direction coil sections 341, 342 of the transport apparatus 3 according to the preceding embodiment. The coupling means 3431, 3432, 3433 can mate with each other as derivable from Fig. 4. The coupling means 3431, 3432, 3433 is preferably configured such that the modules for linear and curved transport tracks can just be clicked together to mount the transport apparatuses 3, 4 of the first and third embodiments together.

Therewith, the versions of the transport apparatuses 3, 4 shown in the embodiments represent modules for linear and curved transport tracks. The modules can be mounted together by using the coupling means 3431, 3432, 3433 arbitrarily to build up a transport track for the machine 1. Herein, each one of the modules for linear and curved transport tracks has its own controller.

In a modification of the third embodiment, the curved second coil sections 343, 344 for moving the carriers 31, 32 in the second moving direction are right angled or comprise an obtuse angle or acute angle. The first linear coil section can then be positioned correspondingly to achieve again the driving of the carriers 31, 32 as decribed with reference to the preceding embodiments.

In a further modification of the third embodiment, the coil sections of the x-direction, i.e. the coil section 330 to 339 still remain perpendicular to one another. However, instead of the radially positioned coil sections 330 to 339 and the correspondingly rotated carrier 32 in Fig. 4, the coil sections 330 to 339 could be tapering to build an alternative curved track for the transport apparatus 4.

All of the above-described implementations of the machine 1, the control device, the transport apparatusses 3, 4 and the method can be used separately or in all possible combinations thereof. In particular, an arbitrary combination of the features of the embodiments is possible. Moreover, in particular the following modifications are conceivable. The elements shown in the figures are depicted schematically and can differ in the specific implementation from the forms shown in the figures provided that the above-described functions are ensured.

The first and second direction coil sections 33, 34 of the above-described embodiments can be constructed according to the principle of a linear motor system.

The number of coils of the first and second coil sections 33, 34 can be selected arbitrarily. The number of first linear coil sections 330 to 339 can be selected arbitrarily. The number of second linear coil sections 341, 342 can be selected arbitrarily. The number of second coil sections 343, 344 building a curved track can be selected arbitrarily.

The number of magnets forming the magnet arrays of the carrier 310 according to the second embodiment can be selected arbitrarily. Further, the magnetic force exerting element 311 of the carrier 31 can comprise only one magnet or a plurality of magnets. The magnetic force exerting element 312 of the carrier 31 can comprise only one magnet or a plurality of magnets. The magnetic force exerting element 313 of the carrier 31 can comprise only one magnet or a plurality of magnets. In particular, it is possible that the magnetic force exerting element 311 of the carrier 31 comprises one magnet, the magnetic force exerting element 312 of the carrier 31 comprises three magnets and the magnetic force exerting element 313 of the carrier 31 comprises two magnets. The magnetic force exerting elements 321, 322, 323 of the carrier 32 can be selected arbitrarily, as well.

The machine 1 can be a machine for producing solar cells, a chemical polishing machine for silicon wafers or any other machine for treating or producing an article 5. That is, the machine 1 can be any other machine in which a transport is used.

Even if the third embodiment describes only curved second coil sections 343, 344 for the second direction coil sections 34, alternatively or in addition thereto, also the first direction coil sections 33 can have a curved form. It is also conceivable that alternatively or in addition thereto the first direction coil sections 33 are right angled or comprise a form having an obtuse angle or acute angle. Due to this, the layout of the tracks of the transport apparatuses 3, 4 according to all of the above-described embodiments is arbitrarily selectable.

## Claims

1. A transport apparatus (3; 4) for transporting carriers (31, 32; 310) in a machine (1), the transport apparatus (3; 4) comprising at least one carrier (31, 32; 310) for carrying a load, and
a planar driving system for driving the at least one carrier (31, 32; 310) with magnetic force between at least two positions in a plane spanned by a first and second moving direction (x, y),
wherein at least one of said carriers (31, 32; 310) comprises less magnetic force exerting elements (312; 322) which are orientated in the second moving direction (y) for driving said carrier (31, 32; 310) in the first moving direction (x) than said carrier (31, 32; 310) comprises magnetic force exerting elements (311, 313; 321, 323) which are orientated in the first moving direction (x) for driving the carrier (31, 32; 310) in the second moving direction (y), so that the planar driving system and said carrier (31, 32; 310) interact to drive said carrier (31, 32; 310) in the first moving direction (x) in a smaller range than in the second moving direction (y),
wherein the at least one carrier (31, 32; 310) comprises first, second and third magnetic force exerting elements (311, 312, 313; 321, 322, 323) which are positioned adjacent to each other and each have short sides and long sides,
wherein the first magnetic force exerting element (311; 321) is positioned with one of its short sides adjacent to one of the long sides of the second magnetic force exerting element (312; 322) and the second magnetic force exerting element (312; 322) is positioned with one of its short sides adjacent to one of the long sides of the third magnetic force exerting element (313; 323), **characterized in that** the first, second and third magnetic force exerting elements (311, 312, 313; 321, 322, 323) form an open frame and **in that** the first and third magnetic force exerting elements (311, 313; 321, 323) are positioned displaced from each other in the first and second moving direction (x, y) and **in that** the centers of the magnetic force exerting elements (311, 312, 313; 321, 322, 323) of the at least one carrier (31, 32) are displaced from each other so that the centers of the magnetic force exerting elements (311, 313; 321, 323) are not located on a straight line.

2. The transport apparatus (3; 4) according to claim 1, wherein the planar driving system is constructed to drive the at least one carrier (31, 32; 310) in the first moving direction (x) in a smaller range than in the second moving direction (y).

3. The transport apparatus (3; 4) according to claim 1 or 2, wherein the planar driving system comprises
at least two first coil sections (33) for moving the at least one carrier (31, 32; 310) in the second moving direction (y), and
at least one second coil section (34; 340) for moving the at least one carrier (31, 32; 310) in the first moving direction (x) which is positioned transverse to the second moving direction (y),
wherein each of the at least two first coil sections (33) has a shorter length than the at least one second coil section (34).

4. The transport apparatus (3; 4) according to claim 3,
wherein the at least one carrier (31, 32; 310) is positioned to interact with at least two coil sections (330 to 339, 341, 342; 343, 344) of the first and second coil sections (33, 34; 340) so that the at least one carrier (31, 32; 310) is transported in the machine (1) in a transport direction, and/or
wherein each of the magnetic force exerting elements (312; 322) which are orientated in the second moving direction (y) are positioned to interact only with one coil section of the at least one second coil section (341; 342; 340).

5. The transport apparatus (3; 4) according to claim 3 or 4,
wherein the first and second coil sections (33, 34) are linear coil sections or curved coil sections (340), and/or
wherein two second coil sections (34) can be coupled with coupling means (3431, 3432, 3433) to lengthen the transport track of the machine (1) arbitrarily.

6. The transport apparatus (3; 4) according to any one of the claims 1 to 5,
wherein the magnetic force exerting elements (311, 313; 321, 323) of the at least one carrier (31, 32), which are orientated in the first and second moving directions (x, y), form the circumference of a tile in which one edge is missing, and/or
wherein the magnetic force exerting elements (311, 312, 313; 321, 322, 323) of said carrier (31, 32; 310) are configured to produce magnetic force by eddy currents generated in said carrier (31, 32; 310).

7. The transport apparatus (3; 4) according to any one of the claims 1 to 6,
wherein the magnetic force exerting elements (311, 312, 313) of said carrier (310) are magnet arrays comprising at least two magnets, and
wherein said carrier (310) comprises at least three magnet arrays which are positioned to each other to form an open frame.

8. The transport apparatus (3; 4) according to claim 7, wherein each one of the three magnet arrays comprises at least two magnets (3111 to 3115, 3121 to 3125, 3131 to 3135) positioned side by side to form a rectangular.

9. The transport apparatus (3; 4) according to claim 7 or 8, wherein one of the rectangular magnet arrays is positioned adjacent to a long side of one of the rectangular magnet arrays and adjacent to a short side of another one of the rectangular magnet arrays.

10. The transport apparatus (3; 4) according to any one of the claims 7 to 9, wherein to the short sides of one of the rectangular magnet arrays is positioned no other one of the rectangular magnet arrays.

11. The transport apparatus (3; 4) according to any one of the claims 1 to 10, further comprising
a plurality of detecting units (35, 36) to detect the position of the at least one carrier (31, 32; 310) at the planar driving system,
wherein the at least one carrier (31, 32; 310) is driven by a control device (2) on the basis of the position detected by the detecting units (35, 36).

12. The machine (1) for performing a process, comprising
a transport apparatus (3; 4) according to one of claims 1 to 11 for transporting carriers (31, 32; 310) in the machine (1),
wherein the transport apparatus (3; 4) is configured to be used in the process performed in the machine (1).

13. The machine (1) according to claim 12, further comprising a control device (2) for controlling the process performed in the machine (1) and for controlling driving of the carriers (31, 32; 310) of the transport apparatus (3; 4) in interaction with the process.

14. A transport method for transporting carriers (31, 32; 310) in a machine, the transport method comprising the steps of
using (S1) at least one carrier (31, 32; 310) for carrying a load, and
driving (S2), by a planar driving system, the at least one carrier (31, 32; 310) with magnetic force between at least two positions in a plane spanned by a first and second moving direction,
wherein at least one of said carriers (31, 32; 310) comprises less magnetic force exerting elements (312; 322) which are orientated in the second moving direction (y) for driving said carrier (31, 32; 310) in the first moving direction (x) than said carrier (31, 32; 310) comprises magnetic force exerting elements (311, 313; 321, 323) which are orientated in the first moving direction (x) for driving the carrier (31, 32; 310) in the second moving direction (y),
wherein the at least one carrier (31, 32; 310) comprises first, second and third magnetic force exerting elements (311, 312, 313; 321, 322, 323) which are positioned adjacent to each other and each have short sides and long sides,
wherein the first magnetic force exerting element (311; 321) is positioned with one of its short sides adjacent to one of the long sides of the second magnetic force exerting element (312; 322) and the second magnetic force exerting element (312; 322) is positioned with one of its short sides adjacent to one of the long sides of the third magnetic force exerting element (313; 323), **characterized in that** the first, second and third magnetic force exerting elements (311, 312, 313; 321, 322, 323) form an open frame , so that the first and third magnetic force exerting elements (311, 313; 321, 323) are positioned displaced from each other in the first and second moving direction (x, y) and **in that** the centers of the magnetic force exerting elements (311, 312, 313; 321, 322, 323) of the at least one carrier (31, 32) are displaced from each other so that the centers of the magnetic force exerting elements (311, 313; 321, 323) are not located on a straight line, and **in that** the planar driving system and said carrier (31, 32; 310) interact to drive said carrier (31, 32; 310) in the first moving direction (x) in a smaller range than in the second moving direction (y).

## Patentansprüche

1. Transportvorrichtung (3; 4) zum Transportieren von Trägern (31, 32; 310) in einer Maschine (1), wobei die Transportvorrichtung (3; 4) Folgendes umfasst:
mindestens einen Träger (31, 32; 310) zum Tragen einer Last und
ein planares Antriebssystem zum Antreiben des mindestens einen Trägers (31, 32; 310) mit Magnetkraft zwischen mindestens zwei Positionen in einer durch eine erste und eine zweite Bewegungsrichtung (x, y) aufgespannten Ebene, wobei mindestens einer der Träger (31, 32; 310) weniger eine Magnetkraft ausübende Elemente (312; 322) umfasst, die in der zweiten Bewegungsrichtung (y) ausgerichtet sind, um den Träger (31, 32; 310) in der ersten Bewegungsrichtung (x) anzutreiben, als der Träger (31, 32; 310) eine Magnetkraft ausübende Elemente (311, 313; 321, 323) umfasst, die in der ersten Bewegungsrichtung (x) ausgerichtet sind, um den Träger (31, 32; 310) in der zweiten Bewegungsrichtung (y) anzutreiben, so dass das planare Antriebssystem und der Träger (31, 32; 310) zusammenwirken, um den Träger (31, 32; 310) in der ersten Bewegungsrichtung (x) in einem kleineren Bereich anzutreiben als in der zweiten Bewegungsrichtung (y), wobei der mindestens eine Träger (31, 32; 310) erste, zweite und dritte eine Magnetkraft ausübende Elemente (311, 312, 313; 321, 322, 323) umfasst, die aneinander angrenzend positioniert sind und jeweils kurze Seiten und lange Seiten aufweisen,
wobei das erste eine Magnetkraft ausübende Element (311; 321) mit einer seiner kurzen Seiten an eine der langen Seiten des zweiten eine Magnetkraft ausübenden Elements (312; 322) angrenzend positioniert ist und das zweite eine Magnetkraft ausübende Element (312; 322) mit einer seiner kurzen Seiten an eine der langen Seiten des dritten eine Magnetkraft ausübenden Elements (313; 323) angrenzend positioniert ist,
**dadurch gekennzeichnet, dass**
die ersten, zweiten und dritten eine Magnetkraft ausübenden Elemente (311, 312, 313; 321, 322, 323) einen offenen Rahmen bilden und
dass die ersten und dritten eine Magnetkraft ausübenden Elemente (311, 313; 321, 323) in der ersten und der zweiten Bewegungsrichtung (x, y) zueinander versetzt positioniert sind und
dass die Mittelpunkte der eine Magnetkraft ausübenden Elemente (311, 312, 313; 321, 322, 323) des mindestens einen Trägers (31, 32) so zueinander versetzt sind, dass die Mittelpunkte der eine Magnetkraft ausübenden Elemente (311, 313; 321, 323) nicht auf einer Geraden liegen.

2. Transportvorrichtung (3; 4) nach Anspruch 1, wobei das planare Antriebssystem dafür konstruiert ist, den mindestens einen Träger (31, 32; 310) in der ersten Bewegungsrichtung (x) in einem kleineren Bereich anzutreiben als in der zweiten Bewegungsrichtung (y).

3. Transportvorrichtung (3; 4) nach Anspruch 1 oder 2, wobei das planare Antriebssystem Folgendes umfasst:
mindestens zwei erste Spulenteilstücke (33), um den mindestens einen Träger (31, 32; 310) in der zweiten Bewegungsrichtung (y) zu bewegen, und
mindestens ein zweites Spulenteilstück (34; 340), um den mindestens einen Träger (31, 32; 310) in der ersten Bewegungsrichtung (x) zu bewegen, welche quer zur zweiten Bewegungsrichtung (y) positioniert ist,
wobei jedes der mindestens zwei ersten Spulenteilstücke (33) eine kürzere Länge aufweist als das mindestens eine zweite Spulenteilstück (34).

4. Transportvorrichtung (3; 4) nach Anspruch 3,
wobei der mindestens eine Träger (31, 32; 310) positioniert ist, um mit mindestens zwei Spulenteilstücken (330 bis 339, 341, 342; 343, 344) der ersten und zweiten Spulenteilstücke (33, 34; 340) so zusammenzuwirken, dass der mindestens eine Träger (31, 32; 310) in der Maschine (1) in einer Transportrichtung transportiert wird, und/oder
wobei jedes der eine Magnetkraft ausübenden Elemente (312; 322), die in der zweiten Bewegungsrichtung (y) ausgerichtet sind, positioniert ist, um mit nur einem Spulenteilstück des mindestens einen zweiten Spulenteilstücks (341; 342; 340) zusammenzuwirken.

5. Transportvorrichtung (3; 4) nach Anspruch 3 oder 4, wobei es sich bei den ersten und zweiten Spulenteilstücken (33, 34) um lineare Spulenteilstücke oder gekrümmte Spulenteilstücke (340) handelt und/oder wobei zwei zweite Spulenteilstücke (34) mit Kopplungsmitteln (3431, 3432, 3433) gekoppelt werden können, um den Transportweg der Maschine (1) beliebig zu verlängern.

6. Transportvorrichtung (3; 4) nach einem der Ansprüche 1 bis 5,
wobei die eine Magnetkraft ausübenden Elemente (311, 313; 321, 323) des mindestens einen Trägers (31, 32), die in der ersten und der zweiten Bewegungsrichtung (x, y) ausgerichtet sind, den Umfang einer Kachel bilden, bei der eine Ecke fehlt, und/oder
wobei die eine Magnetkraft ausübenden Elemente (311, 312, 313; 321, 322, 323) des Trägers (31, 32; 310) dafür ausgelegt sind, durch in dem Träger (31, 32; 310) erzeugte Wirbelströme eine Magnetkraft zu produzieren.

7. Transportvorrichtung (3; 4) nach einem der Ansprüche 1 bis 6,
wobei es sich bei den eine Magnetkraft ausübenden Elementen (311, 312, 313) des Trägers (310) um Magnetanordnungen handelt, die mindestens zwei Magnete umfassen, und
wobei der Träger (310) mindestens drei Magnetanordnungen umfasst, die so zueinander positioniert sind, dass sie einen offenen Rahmen bilden.

8. Transportvorrichtung (3; 4) nach Anspruch 7, wobei jede der drei Magnetanordnungen mindestens zwei Magnete (3111 bis 3115, 3121 bis 3125, 3131 bis 3135) umfasst, die so Seite an Seite positioniert sind, dass sie ein Rechteck bilden.

9. Transportvorrichtung (3; 4) nach Anspruch 7 oder 8, wobei eine der rechteckigen Magnetanordnungen an eine lange Seite einer der rechteckigen Magnetanordnungen angrenzend und an eine kurze Seite einer anderen der rechteckigen Magnetanordnungen angrenzend positioniert ist.

10. Transportvorrichtung (3; 4) nach einem der Ansprüche 7 bis 9, wobei an den kurzen Seiten einer der rechteckigen Magnetanordnungen keine andere der rechteckigen Magnetanordnungen positioniert ist.

11. Transportvorrichtung (3; 4) nach einem der Ansprüche 1 bis 10, ferner umfassend:
eine Vielzahl von Erfassungseinheiten (35, 36), um die Position des mindestens einen Trägers (31, 32; 310) an dem planaren Antriebssystem zu erfassen,
wobei der mindestens eine Träger (31, 32; 310) durch eine Steuereinrichtung (2) auf Grundlage der durch die Erfassungseinheiten (35, 36) erfassten Position angetrieben wird.

12. Maschine (1) zum Durchführen eines Prozesses, umfassend:
eine Transportvorrichtung (3; 4) nach einem der Ansprüche 1 bis 11 zum Transportieren von Trägern (31, 32; 310) in der Maschine (1),
wobei die Transportvorrichtung (3; 4) dafür ausgelegt ist, in dem in der Maschine (1) durchgeführten Prozess verwendet zu werden.

13. Maschine (1) nach Anspruch 12, ferner umfassend eine Steuereinrichtung (2) zum Steuern des in der Maschine (1) durchgeführten Prozesses und zum Steuern des Antreibens der Träger (31, 32; 310) der Transportvorrichtung (3; 4) in Zusammenwirkung mit dem Prozess.

14. Transportverfahren zum Transportieren von Trägern (31, 32; 310) in einer Maschine, wobei das Transportverfahren die folgenden Schritte umfasst:
Verwenden (S1) mindestens eines Trägers (31, 32; 310) zum Tragen einer Last und
durch ein planares Antriebssystem erfolgendes Antreiben (S2) des mindestens einen Trägers (31, 32; 310) mit Magnetkraft zwischen mindestens zwei Positionen in einer durch eine erste und eine zweite Bewegungsrichtung aufgespannten Ebene,
wobei mindestens einer der Träger (31, 32; 310) weniger eine Magnetkraft ausübende Elemente (312; 322) umfasst, die in der zweiten Bewegungsrichtung (y) ausgerichtet sind, um den Träger (31, 32; 310) in der ersten Bewegungsrichtung (x) anzutreiben, als der Träger (31, 32; 310) eine Magnetkraft ausübende Elemente (311, 313; 321, 323) umfasst, die in der ersten Bewegungsrichtung (x) ausgerichtet sind, um den Träger (31, 32; 310) in der zweiten Bewegungsrichtung (y) anzutreiben,
wobei der mindestens eine Träger (31, 32; 310) erste, zweite und dritte eine Magnetkraft ausübende Elemente (311, 312, 313; 321, 322, 323) umfasst, die aneinander angrenzend positioniert sind und jeweils kurze Seiten und lange Seiten aufweisen,
wobei das erste eine Magnetkraft ausübende Element (311; 321) mit einer seiner kurzen Seiten an eine der langen Seiten des zweiten eine Magnetkraft ausübenden Elements (312; 322) angrenzend positioniert ist und das zweite eine Magnetkraft ausübende Element (312; 322) mit einer seiner kurzen Seiten an eine der langen Seiten des dritten eine Magnetkraft ausübenden Elements (313; 323) angrenzend positioniert ist,
**dadurch gekennzeichnet, dass**
die ersten, zweiten und dritten eine Magnetkraft ausübenden Elemente (311, 312, 313; 321, 322, 323) einen offenen Rahmen bilden, so dass die ersten und dritten eine Magnetkraft ausübenden Elemente (311, 313; 321, 323) in der ersten und der zweiten Bewegungsrichtung (x, y) zueinander versetzt positioniert sind, und
dass die Mittelpunkte der eine Magnetkraft ausübenden Elemente (311, 312, 313; 321, 322, 323) des mindestens einen Trägers (31, 32) so zueinander versetzt sind, dass die Mittelpunkte der eine Magnetkraft ausübenden Elemente (311, 313; 321, 323) nicht auf einer Geraden liegen, und dass das planare Antriebssystem und der Träger (31, 32; 310) so zusammenwirken, dass sie den Träger (31, 32; 310) in der ersten Bewegungsrichtung (x) in einem kleineren Bereich antreiben als in der zweiten Bewegungsrichtung (y).

## Revendications

1. Appareil de transport (3 ; 4) pour transporter des supports (31, 32 ; 310) dans une machine (1), l'appareil de transport (3 ; 4) comprenant
au moins un support (31, 32 ; 310) pour supporter une charge, et
un système d'entraînement plan pour entraîner l'au moins un support (31, 32 ; 310) avec une force magnétique entre au moins deux positions dans un plan couvert par une première et une seconde direction de déplacement (x, y),
dans lequel au moins un desdits supports (31, 32 ; 310) comprend moins d'éléments applicateurs de force magnétique (312 ; 322), qui sont orientés dans la seconde direction de déplacement (y) pour entraîner ledit support (31, 32 ; 310) dans la première direction de déplacement (x), que ledit support (31, 32 ; 310) qui comprend des éléments applicateurs de force magnétique (311, 313 ; 321, 323), qui sont orientés dans la première direction de déplacement (x) pour entraîner le support (31, 32 ; 310) dans la seconde direction de déplacement (y), pour que le système d'entraînement plan et ledit support (31, 32 ; 310) interagissent pour entraîner ledit support (31, 32 ; 310) dans la première direction de déplacement (x) dans une gamme plus petite que dans la seconde direction de déplacement (y),
dans lequel l'au moins un support (31, 32 ; 310) comprend des premier, deuxième et troisième éléments applicateurs de force magnétique (311, 312, 313 ; 321, 322, 323) qui sont positionnés de façon adjacente les uns aux autres et ont chacun des côtés courts et des côtés longs,
dans lequel le premier élément applicateur de force magnétique (311 ; 321) est positionné avec un de ses côtés courts adjacent à un des côtés longs du deuxième élément applicateur de force magnétique (312 ; 322) et le deuxième élément applicateur de force magnétique (312 ; 322) est positionné avec un de ses côtés courts adjacent à un des côtés longs du troisième élément applicateur de force magnétique (313 ; 323),
**caractérisé en ce que** les premier, deuxième et troisième éléments applicateurs de force magnétique (311, 312, 313 ; 321, 322, 323) forment un cadre ouvert et **en ce que** les premier et troisième éléments applicateurs de force magnétique (311, 313 ; 321, 323) sont positionnés de façon déplacée l'un par rapport à l'autre dans la première et la seconde direction de déplacement (x, y) et **en ce que** les centres des éléments applicateurs de force magnétique (311, 312, 313 ; 321, 322, 323) de l'au moins un support (31, 32) sont déplacés par rapport aux autres pour que les centres des éléments applicateurs de force magnétique (311, 313 ; 321, 323) ne soient pas situés sur une ligne droite.

2. Appareil de transport (3 ; 4) selon la revendication 1, dans lequel le système d'entraînement plan est construit pour entraîner l'au moins un support (31, 32 ; 310) dans la première direction de déplacement (x) dans une gamme plus petite que dans la seconde direction de déplacement (y).

3. Appareil de transport (3 ; 4) selon la revendication 1 ou 2, dans lequel le système d'entraînement plan comprend
au moins deux premières sections de bobine (33) pour déplacer l'au moins un support (31, 32 ; 310) dans la seconde direction de déplacement (y), et
au moins une seconde section de bobine (34 ; 340) pour déplacer l'au moins un support (31, 32 ; 310) dans la première direction de déplacement (x) qui est positionnée transversalement à la seconde direction de déplacement (y),
dans lequel chacune des au moins deux premières sections de bobine (33) a une longueur plus courte que l'au moins une seconde section de bobine (34).

4. Appareil de transport (3 ; 4) selon la revendication 3,
dans lequel l'au moins un support (31, 32 ; 310) est positionné pour interagir avec au moins deux sections de bobine (330 à 339, 341, 342 ; 343, 344) des premières et secondes sections de bobine (33, 34 ; 340) pour que l'au moins un support (31, 32 ; 310) soit transporté dans la machine (1) dans une direction de transport, et/ou
dans lequel chacun des éléments applicateurs de force magnétique (312 ; 322), qui sont orientés dans la seconde direction de déplacement (y), est positionné pour interagir seulement avec une section de bobine de l'au moins une seconde section de bobine (341 ; 342 ; 340).

5. Appareil de transport (3 ; 4) selon la revendication 3 ou 4, dans lequel les premières et secondes sections de bobine (33, 34) sont des sections de bobine linéaires ou des sections de bobine incurvées (340), et/ou
dans lequel deux secondes sections de bobine (34) peuvent être couplées à des moyens de couplage (3431, 3432, 3433) pour allonger le chemin de transport de la machine (1) de façon arbitraire.

6. Appareil de transport (3 ; 4) selon l'une quelconque des revendications 1 à 5, dans lequel les éléments applicateurs de force magnétique (311, 313 ; 321, 323) de l'au moins un support (31, 32), qui sont orientés dans les première et seconde directions de déplacement (x, y), forment la circonférence d'un cube dans lequel un bord est manquant, et/ou
dans lequel les éléments applicateurs de force magnétique (311, 312, 313 ; 321, 322, 323) dudit support (31, 32 ; 310) sont configurés pour produire une force magnétique par l'intermédiaire de courants de Foucault générés dans ledit support (31, 32 ; 310).

7. Appareil de transport (3 ; 4) selon l'une quelconque des revendications 1 à 6,
dans lequel les éléments applicateurs de force magnétique (311, 312, 313) dudit support (310) sont des séries d'aimants comprenant au moins deux aimants, et
dans lequel ledit support (310) comprend au moins trois séries d'aimants qui sont positionnées les unes par rapport aux autres pour former un cadre ouvert.

8. Appareil de transport (3 ; 4) selon la revendication 7, dans lequel chacune des trois séries d'aimants comprend au moins deux aimants (3111 à 3115, 3121 à 3125, 3131 à 3135) positionnés côte à côte pour former un rectangle.

9. Appareil de transport (3 ; 4) selon la revendication 7 ou 8, dans lequel une des séries d'aimants rectangulaires est positionnée de façon adjacente à un côté long d'une des séries d'aimants rectangulaires et de façon adjacente à un côté court d'une autre des séries d'aimants rectangulaires.

10. Appareil de transport (3 ; 4) selon l'une quelconque des revendications 7 à 9, dans lequel sur les côtés courts d'une des séries d'aimants rectangulaires n'est positionnée aucune autre des séries d'aimants rectangulaires.

11. Appareil de transport (3 ; 4) selon l'une quelconque des revendications 1 à 10, comprenant en outre
une pluralité d'unités de détection (35, 36) pour détecter la position de l'au moins un support (31, 32 ; 310) sur le système d'entraînement plan,
dans lequel l'au moins un support (31, 32 ; 310) est entraîné par un dispositif de commande (2) sur la base de la position détectée par les unités de détection (35, 36) .

12. Machine (1) pour réaliser un processus, comprenant
un appareil de transport (3 ; 4) selon l'une des revendications 1 à 11 pour transporter des supports (31, 32 ; 310) dans la machine (1), dans lequel l'appareil de transport (3 ; 4) est configuré pour être utilisé dans le processus réalisé dans la machine (1).

13. Machine (1) selon la revendication 12, comprenant en outre un dispositif de commande (2) pour commander le processus réalisé dans la machine (1) et pour commander l'entraînement des supports (31, 32 ; 310) de l'appareil de transport (3 ; 4) en interaction avec le processus.

14. Procédé de transport pour transporter des supports (31, 32 ; 310) dans une machine, le procédé de transport comprenant les étapes de
l'utilisation (S1) d'au moins un support (31, 32 ; 310) pour supporter une charge, et
l'entraînement (S2), par un système d'entraînement plan, de l'au moins un support (31, 32 ; 310) avec une force magnétique entre au moins deux positions dans un plan couvert par une première et une seconde direction de déplacement,
dans lequel au moins un desdits supports (31, 32 ; 310) comprend moins d'éléments applicateurs de force magnétique (312 ; 322), qui sont orientés dans la seconde direction de déplacement (y) pour entraîner ledit support (31, 32 ; 310) dans la première direction de déplacement (x), que ledit support (31, 32 ; 310) qui comprend des éléments applicateurs de force magnétique (311, 313 ; 321, 323) qui sont orientés dans la première direction de déplacement (x) pour entraîner le support (31, 32 ; 310) dans la seconde direction de déplacement (y),
dans lequel l'au moins un support (31, 32 ; 310) comprend des premier, deuxième et troisième éléments applicateurs de force magnétique (311, 312, 313 ; 321, 322, 323) qui sont positionnés de façon adjacente les uns aux autres et ont chacun des côtés courts et des côtés longs,
dans lequel le premier élément applicateur de force magnétique (311 ; 321) est positionné avec un de ses côtés courts adjacent à un des côtés longs du deuxième élément applicateur de force magnétique (312 ; 322) et le deuxième élément applicateur de force magnétique (312 ; 322) est positionné avec un de ses côtés courts adjacent à un des côtés longs du troisième élément applicateur de force magnétique (313 ; 323),
**caractérisé en ce**
**que** les premier, deuxième et troisième éléments applicateurs de force magnétique (311, 312, 313 ; 321, 322, 323) forment un cadre ouvert, pour que les premier et troisième éléments applicateurs de force magnétique (311, 313 ; 321, 323) soient positionnés de façon déplacée l'un par rapport à l'autre dans la première et la seconde direction de déplacement (x, y) et
**en ce que** les centres des éléments applicateurs de force magnétique (311, 312, 313 ; 321, 322, 323) de l'au moins un support (31, 32) sont déplacés par rapport aux autres pour que les centres des éléments applicateurs de force magnétique (311, 313 ; 321, 323) ne soient pas situés sur une ligne droite, et
**en ce que** le système d'entraînement plan et ledit support (31, 32 ; 310) interagissent pour entraîner ledit support (31, 32 ; 310) dans la première direction de déplacement (x) dans une gamme plus petite que dans la seconde direction de déplacement (y).
